# EUROPEAN PATENT APPLICATION

(11) **EP 4 730 870 A2**
(43) Date of publication of application: **22.04.2026**
(21) Application number: 25207709.4
(22) Date of filing: 09.10.2025
(51) Int. Cl.: H04W 48/16

(54) **IMPROVING WI-FI DISCOVERY TIME AND IMPROVING THROUGHPUT AND LATENCY IN CONCURRENT USE CASES USING SUB-BAND OPERATIONS**

(30) Priority: 16.10.2024 US 202418917497
(71) Applicant: Avago Technologies International Sales Pte. Limited, Singapore 768923 (SG)
(72) Inventor: Kommanaboyina, Subramanyam, Irvine, CA, 92618 (US); Bandaru, Yogesh, Irvine, CA, 92618 (US); Somaraju, Dasam, Irvine, CA, 92618 (US); Tadahal, Shivkumar Basavaraj, Irvine, CA, 92618 (US); Kamath, Manoj Raveendranath, Irvine, CA, 92618 (US)
(74) Representative: Grünecker Patent- und Rechtsanwälte PartG mbB

(57) **Abstract**

The disclosure describes systems and methods for improving Wi-Fi discovery time and improving throughput and latency in concurrent use cases using sub-band operations. A wireless local area network (WLAN) device, including a physical layer (PHY), can be configured to increase a bandwidth of operation to a threshold and to disable switch operations for a channel switch or sub-band switch. The bandwidth can include a plurality of sub-bands. Each of the plurality of sub-bands can correspond to a channel of a plurality of channels of the increased bandwidth. During a Wi-Fi discovery phase, the WLAN device can be configured to scan a sub-band of the plurality of sub-bands of the bandwidth and, while skipping the switch operations between sub-bands, scan one or more additional sub-bands of the plurality of sub-bands of the bandwidth.

## Description

### FIELD OF THE DISCLOSURE

This disclosure generally relates to systems and methods for wireless communication between access points and wireless communication devices, including, without limitation, improving Wi-Fi discovery time and improving throughput and latency in concurrent use cases using sub-band operations.

### BACKGROUND

The market for wireless communications devices has been growing due to increased use of portable devices, increased connectivity, and data transfer between all manners of devices. Digital switching techniques have facilitated the large-scale deployment of affordable, easy-to-use wireless communication networks. Wireless communication can operate in accordance with various standards, such as the IEEE 802.11x (e.g., Wi-Fi technology), Bluetooth, global system for mobile communications (GSM), and code division multiple access (CDMA). Using such technologies, wireless communication devices can connect to local area networks and the internet without physical cables, communicating over radio frequencies and across various spaces and ranges.

### SUMMARY

The technical solutions of the present disclosure are directed to improving Wi-Fi discovery time and improving throughput and latency in concurrent use cases using sub-band operations. A wireless local area network (WLAN) allows access points and client devices to connect and communicate wirelessly within a localized area, such as a home, office, or campus. The WLAN can support a wide range of applications, from web browsing to intensive real-time communication and entertainment such as audio/video conferencing and online gaming. These applications demand not only efficient data transmission but also quick delivery of data packets to provide seamless user experiences. If multiple networks or devices use the same channel, the configuration can lead to slower speeds and connection issues. In this regard, channel switching in WLAN devices refers to the process of changing the wireless channel that the WLAN device is using to communicate. The channel switching can be done for several reasons, such as avoiding interference, improving performance, or complying with regulatory requirements. However, channel switching in WLAN devices can cause overhead, impacting various network performance metrics and use cases. The overhead can arise from the time desired to reconfigure the radio frequency (RF) circuitry of the WLAN device and adjust associated parameters when switching to a new channel. This additional time can delay the scan process, as the WLAN device is to reestablish configurations each time the device moves to a different channel, resulting in extended Wi-Fi discovery times.

The associated latency can be particularly problematic for real-time applications, such as video conferencing or online gaming, as the WLAN device experiences delays while scanning for available networks and re-establishing connections. Additionally, the channel switching process can cause an interruption of services, resulting in a temporary loss of connectivity while the WLAN device is between channels, further increasing discovery time. In addition to this delay, frequent channel switching during the scan process can increase power consumption, particularly in batteryoperated devices such as smartphones or laptops. In environments with multiple devices, network congestion can worsen, as frequent channel switching can lead to increased interference and reduced overall network performance.

In some cases, where a WLAN device is managing multiple concurrent roles, such as operating as a station connected to an access point while simultaneously participating in a peer-to-peer (P2P) data transfer with another device (e.g., functioning as a P2P group owner), the efficiency of its operation becomes dependent on how well the WLAN device manages control channels for each role. Concurrent roles can refer to situations where a WLAN device performs different operations (e.g., functioning as a station and P2P group owner) across different channels within the same wideband spectrum. The channel switching overhead can affect the performance of these concurrent roles, for instance, when channels are spaced far apart within the wideband (e.g., channels 36/20 and 64/20 of a 160MHz channel within the 5GHz spectrum). In this regard, the WLAN device can experience reduced throughput, as the time spent switching channels can reduce the overall time available for data transmission. Additionally, the WLAN device can experience synchronization issues when attempting to coordinate channel switching across multiple roles, where failure to align channel switching times can lead to data loss or service disruptions. Furthermore, switching to new channels may expose the WLAN device to interference from other devices operating on the same frequencies, degrading performance across all concurrent roles. The cumulative effect of increased latency, reduced throughput, and interference can lead to overall quality of service (QoS) degradation for the multiple roles the WLAN device is managing concurrently.

The technical solutions disclosed herein can overcome the challenges of overhead associated with channel switching in WLAN devices, particularly during Wi-Fi discovery and when managing concurrent roles across multiple channels. The technical solutions can configure the physical layer (PHY) to operate on a wider bandwidth and select one sub-band at a time. Instead of performing channel switching, the WLAN device can quickly switch between sub-bands, reducing the time spent switching between operating frequencies. Sub-band switching can be much faster than channel switching, thereby improving the efficiency of operations, especially in Wi-Fi discovery. The WLAN device can be configured to scan sub-bands on a per-role basis, for example, scanning a sub-band of the plurality of sub-bands for one role and, while skipping switch operations between sub-bands, scanning additional sub-bands for another role. The sub-band switching can be implemented in any order or sequence. This configuration facilitates efficient management of concurrent roles with reduced overhead. The WLAN device can scan across multiple channels within a wider bandwidth without the desire for full channel switch operations. By utilizing sub-band switching, the WLAN device can avoid the time-consuming reconfiguration process associated with channel switches.

In cases where the WLAN device manages multiple concurrent roles, such as operating as a station connected to an access point while concurrently participating in a P2P data transfer, the technical solutions can configure the device to operate within a single wide bandwidth to mitigate synchronization issues and throughput reductions caused by frequent channel switches. The WLAN device can manage different control channels by operating across sub-bands within the same bandwidth, reducing the risk of data loss or performance degradation. For multi-channel use cases, such as neighbor awareness networking, where the WLAN device operates in roles across separate channels or at the extreme ends of the wideband spectrum (e.g., channels 36/20 and 64/20 of a 160MHz channel within the 5GHz spectrum), the technical solutions can allow concurrent roles to operate within a single wide bandwidth channel without channel switching. For example, by utilizing sub-band switching instead of full channel switching, the WLAN device can maintain continuous communication between roles without interruptions or delays caused by channel reconfiguration. Furthermore, the local oscillator (LO) leakage can be isolated or contained to the center frequency of the wider bandwidth, thereby avoiding interference across individual channels and further improving network performance.

At least one aspect of the technical solutions is directed to a system of improving Wi-Fi discovery time and improving throughput and latency in concurrent use cases using sub-band operations. The system can include a wireless local area network (WLAN) device, including a physical layer (PHY), configured to increase a bandwidth of operation to a threshold and to disable switch operations for a channel switch or sub-band switch. The bandwidth can include a plurality of sub-bands. Each of the plurality of sub-bands can correspond to a channel of a plurality of channels of the increased bandwidth. The WLAN device can be configured, during a Wi-Fi discovery phase, to scan a sub-band of the plurality of sub-bands of the bandwidth, and while skipping the switch operations between sub-bands, scan one or more additional sub-bands of the plurality of sub-bands of the bandwidth.

In some embodiments, the threshold can be a maximum bandwidth configured on the WLAN device based on a wireless standard being used by the WLAN device. In some embodiments, an aggregate of scan times through the plurality of sub-bands can be less than an aggregate scan time when the WLAN device is configured to scan using channel switch operations or sub-band switch operations. In some embodiments, the WLAN device can be configured to scan the one or more additional sub-bands of the plurality of sub-bands of the bandwidth until a network access point is discovered for which to make a connection. In some embodiments, the WLAN device can be configured to dynamically select the sub-band of the plurality of sub-bands for one or more operational modes within the bandwidth. In some embodiments, the WLAN device can be configured to perform the Wi-Fi discovery phase across multiple channels using continuous sub-band scanning across the bandwidth. In some embodiments, the WLAN device can be configured to implement one or more network operations across the plurality of sub-bands within a wide bandwidth channel.

Another aspect of the technical solutions is directed to a system of improving Wi-Fi discovery time and improving throughput and latency in concurrent use cases using sub-band operations. The system can include a wireless local area network (WLAN) device configured to increase a bandwidth of operation and to disable switch operations for a channel switch or sub-band switch. The bandwidth can include a plurality of sub-bands. Each of the plurality of sub-bands can correspond to a channel of a plurality of channels of the bandwidth. The WLAN device can be configured to scan sub-bands on a per-role basis: scan a sub-band of the plurality of sub-bands of the bandwidth for a first role of a plurality of roles, and while skipping the switch operations between sub-bands, scan one or more additional sub-bands of the plurality of sub-bands of the bandwidth for a second role of the plurality of roles.

In some embodiments, a physical layer (PHY) of the WLAN device can be configured to increase the bandwidth of operation to a threshold. In some embodiments, the threshold can be a maximum bandwidth configured on the WLAN device based on a wireless standard being used by the WLAN device. In some embodiments, the WLAN device can perform concurrent operations for the plurality of roles. In some embodiments, the plurality of roles can include peer-to-peer scanning and access point scanning. In some embodiments, an aggregate of scan times through the plurality of sub-bands can be less than an aggregate scan time when the WLAN device is configured to scan using channel switch operations or sub-band switch operations. In some embodiments, the WLAN device can be configured to scan the one or more additional sub-bands of the plurality of sub-bands of the bandwidth until a network access point is discovered for which to make a connection. In some embodiments, the WLAN device can be configured to dynamically select the sub-band of the plurality of sub-bands for one or more operational modes within the bandwidth. In some embodiments, the WLAN device can be configured to perform the Wi-Fi discovery phase across multiple channels using continuous sub-band scanning across the bandwidth. In some embodiments, the WLAN device can be configured to implement one or more network operations across the plurality of sub-bands within a wide bandwidth channel.

Yet another aspect of the technical solutions is directed to a method of improving Wi-Fi discovery time and improving throughput and latency in concurrent use cases using sub-band operations. The method can include increasing, by a wireless local area network (WLAN) device, including a physical layer (PHY), a bandwidth of operation to a threshold. The method can include disabling, by the WLAN device, switch operations for both a channel switch and a sub-band switch. The bandwidth can include a plurality of sub-bands. Each of the plurality of sub-bands can correspond to a channel of a plurality of channels of the increased bandwidth. The method can include scanning, by the WLAN device, during a Wi-Fi discovery phase, a sub-band of the plurality of sub-bands of the bandwidth. The method can include, while skipping the switch operations between sub-bands, scanning, by the WLAN device, one or more additional sub-bands of the plurality of sub-bands of the bandwidth.

In some embodiments, the threshold can be a maximum bandwidth configured on the WLAN device based on a wireless standard being used by the WLAN device. The method can include reducing an aggregate scan time through the plurality of sub-bands, where the aggregate scan time through the plurality of sub-bands can be less than the aggregate scan time when the WLAN device is configured to scan using channel switch operations or sub-band switch operations. The method can include scanning, by the WLAN device, the one or more additional sub-bands of the plurality of sub-bands of the bandwidth until a network access point is discovered for which to make a connection.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A illustrates a block diagram depicting a network environment including one or more access points in communication with one or more devices or stations, in accordance with one or more embodiments.
FIGS. 1B and 1C illustrate block diagrams depicting computing devices useful in connection with the methods and systems described herein, in accordance with one or more embodiments.
FIG. 2 illustrates a block diagram of an example system for improving Wi-Fi discovery time and improving throughput and latency in concurrent use cases using sub-band operations, in accordance with one or more embodiments.
FIG. 3 illustrates an example flow diagram of a method for improving Wi-Fi discovery time and improving throughput and latency in concurrent use cases using sub-band operations, in accordance with one or more embodiments.
FIG. 4 illustrates an example implementation of performing Wi-Fi scanning of multiple channels, in accordance with one or more embodiments.
FIG. 5 illustrates an example implementation of concurrency use cases with one or more roles operating on different channels, in accordance with one or more embodiments.
FIG. 6 illustrates an example implementation of local oscillator leakage in relation to a station operating on different channels, in accordance with one or more embodiments.
FIG. 7 illustrates an example implementation of local oscillator leakage in relation to a station operating on different sub-bands, in accordance with one or more embodiments.

### DETAILED DESCRIPTION

The following IEEE standard(s), including any draft versions of such standard(s), are hereby incorporated herein by reference in their entirety and are made part of the present disclosure for all purposes: WiFi Alliance standards and IEEE 802.11 standards, including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment that can be useful for practicing embodiments described herein; and
- Section B describes systems and methods for improving Wi-Fi discovery time and improving throughput and latency in concurrent use cases using sub-band operations.

### A. Computing and Network Environment

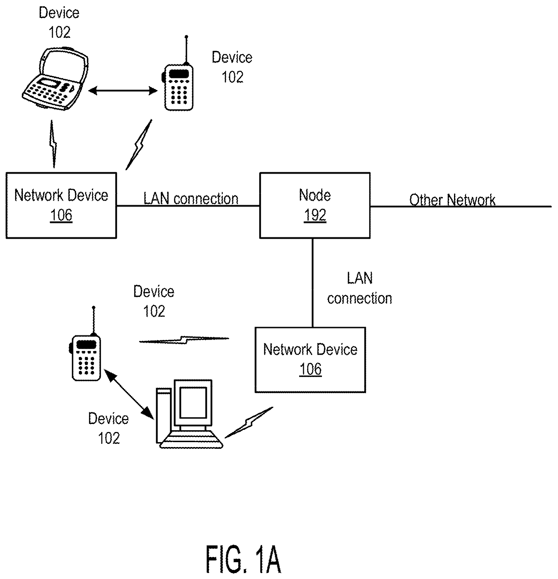

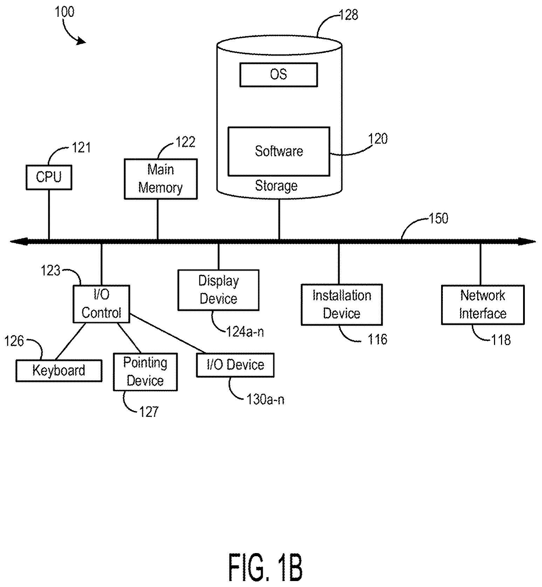

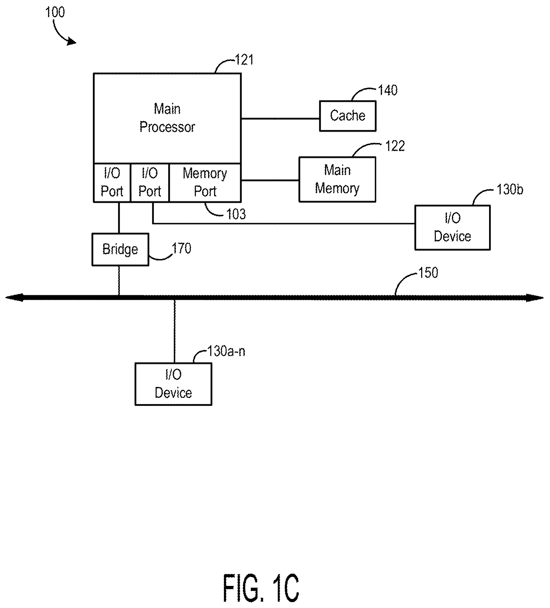

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using Wi-Fi or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other communication devices 102 to utilize that wired connection. A network device 106 or AP can be implemented to support a standard for sending and receiving data using one or more radio frequencies. Those standards and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., inhome, in-vehicle, or in-building) wireless networks (e.g., IEEE 802.11, Bluetooth, ZigBee, any other type of radio frequency-based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106. In some implementations, the wireless communication devices 102 can simultaneously perform multiple roles, such as connecting to an access point for network resources and establishing a peer-to-peer connection with another device, such as a TV.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an input/output (I/O) controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more I/O devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above-described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with the main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screens, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, a USB device, a hard drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect, or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smartphone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Systems and Methods for Improving Wi-Fi Discovery Time and Improving Throughput and Latency in Concurrent Use Cases Using Sub-Band Operations

Below are detailed descriptions of various concepts related to, and embodiments of, techniques, approaches, methods, apparatuses, and systems for improving Wi-Fi discovery time and improving throughput and latency in concurrent use cases using sub-band operations. The various concepts introduced above and discussed in greater detail below may be implemented in any of numerous ways, as the described concepts are not limited to any particular manner of implementation. Examples of specific embodiments and applications are provided primarily for illustrative purposes.

The technical solutions disclosed herein can overcome the challenges of overhead associated with channel switching in WLAN devices, particularly during Wi-Fi discovery and when managing concurrent roles across multiple channels. The system can include a WLAN device, including a physical layer (PHY), which can be configured to increase the operating bandwidth to a predefined threshold. The threshold can indicate the maximum bandwidth supported by the WLAN device and can be divided into smaller segments called sub-bands, with each sub-band corresponding to a channel within the overall bandwidth. The WLAN device can be configured to improve Wi-Fi discovery by allowing the device to scan sub-bands without performing time-consuming channel switch operations. For example, during the Wi-Fi discovery phase, the WLAN device can scan a specific sub-band of the available bandwidth and, while bypassing switch operations between sub-bands, can scan additional sub-bands to improve network detection efficiency. When managing concurrent roles, such as operating as a station connected to an access point while concurrently participating in peer-to-peer data transfer, the WLAN device can assign different roles to different sub-bands. For example, the WLAN device can scan a sub-band for one role and, while avoiding switch operations, can scan additional sub-bands for another role. The technical solutions disclosed herein can reduce latency, enhance throughput, and maintain seamless operations across multiple tasks without the delays caused by channel switching.

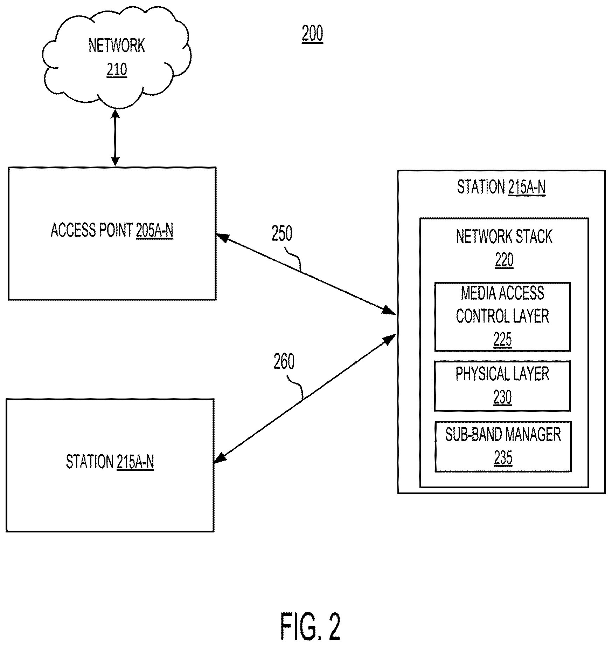

FIG. 2 illustrates an example system 200 for improving Wi-Fi discovery time and improving throughput and latency in concurrent use cases using sub-band operations. Example system 200 can include one or more access points 205A-205N (sometimes referred to herein as an access point 205) communicatively coupled with one or more stations 215A-215N (sometimes referred to herein as a station 215) over one or more networks 210 or via a communication link 250. Furthermore, station 215 can be communicatively coupled with another station 215 (e.g., for peer-to-peer communication) via a communication link 260. Any of the systems described in connection with FIGS. 1A-1C can be configured, constructed, or implemented to implement, operate, and/or use any of the options and techniques described in FIG. 2.

The system 200 can be an example of a wireless local area network (WLAN), such as a Wi-Fi network. In the system 200, a WLAN device can include any device that facilitates wireless communication within the local area network, such as access points 210 (that broadcast wireless signals for devices to connect to), stations 215 (e.g., laptops, smartphones, televisions, or internet of thing (IoT) devices that communicate via the wireless network), and wireless network interface cards embedded in these devices to facilitate communication. In some embodiments, the WLAN device can include wireless routers, which may be used in larger networks to connect multiple access points or provide advanced networking features, and antennas that transmit and receive radio waves to facilitate communication.

The WLAN devices can initiate the Wi-Fi discovery process. For example, the WLAN device can perform scanning to detect available wireless networks. In some embodiments, the Wi-Fi discovery process can include active scanning, where the station 215 transmits probe requests and receives probe responses from the access point 205, or passive scanning, where the station 215 monitors beacon frames broadcast by the access point 205. After scanning, the WLAN device can evaluate the detected networks based on parameters such as signal strength, security protocols, and predefined configurations, and can select the network. The WLAN device can initiate authentication with the selected network to ensure compliance with security protocols (such as WPA2, WPA3), which can include the exchange of security keys or certificates. Once authenticated, the station 215 can send an association request to the access point 205, which replies with an association response to complete the connection. In some embodiments, the WLAN device can configure its IP address, for example, through dynamic host configuration protocol or a static assignment, to maintain communication with other devices on the network and access external resources.

The access point 205 can include a device, system, or module (including a combination of hardware and software) that allows wireless communication devices to connect to a wired network using Wi-Fi or other standards. The access point 205 can sometimes be referred to as a wireless access point (WAP). The access point 205 can establish a communication link 250 with one or more stations 215 to provide wireless connectivity. The communication link 250 can be used to transmit and receive data between the access point 205 and the stations 215. The access point 205 can include components, such as an antenna for transmitting and receiving wireless signals, a radio device for managing wireless communications, a CPU for processing data and control operations, and memory (DDR) for storing operational data and configurations. The access point 205 can be implemented (e.g., configured, designed, and/or built) for operating in a wireless local area network (WLAN). The access point 205 can connect to a router (e.g., via a wired network) as a standalone device in some embodiments. In some embodiments, the access point 205 can be a component of a router. The access point 205 can provide multiple devices with access to a network. The access point 205 can, for example, connect to a wired Ethernet connection and provide wireless connections using radio frequency links for other devices to utilize that wired connection. The access point 205 can be implemented to support a standard for sending and receiving data using one or more radio frequencies. Those standards, and the frequencies they use can be defined by the IEEE (e.g., IEEE 802.11 standards). The access point 205 can be configured and/or used to support Internet hotspots, and/or on a network to extend the network's Wi-Fi signal range.

The network 210 can include computer networks such as the Internet, local, wide, metro, or other area networks, intranets, satellite networks, other computer networks such as voice or data mobile phone communication networks, and combinations thereof. The network 210 may be any form of computer network that can relay information between the access point 205, the station 215, and one or more information sources, such as web servers or external databases, amongst others. The network 210 can include the Internet and/or other types of data networks, such as a local area network (LAN), a wide area network (WAN), a cellular network, a satellite network, or other types of data networks. The network 210 can include any number of computing devices (e.g., computers, servers, routers, network switches, etc.) that are configured to receive and/or transmit data within the network 210. The network 210 can include any number of hardwired and/or wireless connections. Any or all of the computing devices described herein can communicate wirelessly (e.g., via Wi-Fi, cellular, radio, etc.) with a transceiver that is hardwired (e.g., via a fiber optic cable, a CAT5 cable, etc.) to other computing devices in the network 210. Any or all of the computing devices described herein can communicate wirelessly with the computing devices of the network 210 via a proxy device (e.g., a router, network switch, or gateway).

The station 215 can be a wireless communication device configured for wireless communication in wireless communication networks, such as a LAN, WAN, or cellular network. The station 215 can be configured to communicate wirelessly with network devices, such as the access point 205, using any of the IEEE standards (e.g., IEEE 802.11 standards). The station 215 can be any of the user devices described in connection with FIGS. 1A-C. In some embodiments, the station 215 can include one or more wireless communication devices 102, as described in FIG. 1A, configured to receive services from a communication system. The station 215 can establish direct communication links with other stations 215 through communication link 260 to allow peer-to-peer communication for various purposes, such as file sharing, gaming, or generating ad-hoc networks. The communication link 260 can operate using the same or different wireless standards as the communication link 250 between the station 215 and the access point 205.

In some embodiments, the station 215 can include a network stack 220. The network stack 220 can include a combination of software and hardware components that operate to manage data transmission over a wireless medium. The network stack 220 can provide a framework for managing data transmission, reception, and management within a wireless network. The network stack 220 can include several layers, each performing specific functions. For example, the network stack can include a media access control (MAC) layer 225 and a physical layer (PHY) 230, among other layers. In some embodiments, the network stack 220, including the MAC layer 225 and PHY 230, can be incorporated into one or more WLAN devices, such as the station 215 and the access point 205.

The MAC layer 225 can be a component of the data link layer in the OSI model that manages network access and resource allocation. The MAC layer 225 can include MAC addresses, for example, identifiers assigned to devices on a network that can be used for addressing and routing. The MAC layer 225 can organize data into frames, manage the start and end points of the frames, and implement error-detection techniques, such as frame check sequences (FCS), to maintain data integrity during transmission. The MAC layer 225 can control how devices share communication media, using protocols to prevent collisions and manage retransmissions. For example, the MAC layer 225 can utilize various protocols, including CSMA/CD (carrier sense multiple access with collision detection) for wired networks and CSMA/CA (carrier sense multiple access with collision avoidance) for wireless networks.

The PHY 230 can operate as the lowest layer in the OSI model, controlling the transmission and reception of raw data bits over a wireless medium. The PHY 230 can include components such as transceivers for transmitting and receiving signals, antennas for managing radio signals, modulators and demodulators for handling signal modulation, and analog and digital circuits for converting signals between analog and digital forms, among others. The PHY 230 can maintain synchronization between the transmitter and receiver. The PHY 230 can include PHY chips, which can implement physical layer functions and include RF, mixed-signal, and digital baseband components. The PHY 230 can manage signal processing tasks, including converting digital data into electrical, optical, or radio signals and vice versa. The PHY 230 can manage modulation and demodulation processes, encoding data into signals for transmission and decoding received signals into data.

In some embodiments, the PHY 230 can manage bandwidth, for example, by controlling the rate and capacity of data transmission over the communication medium. The PHY 230 can determine the bit rate, allowing more data to be transmitted within a given time frame. The PHY 230 can allocate specific frequency bands for communication. The PHY 230 can enhance bandwidth using different modulation schemes, where more complex techniques can transmit more bits per signal change. The PHY 230 can define the width of the communication channel, with wider channels carrying more data, for example. In some embodiments, the PHY 230 can dynamically adjust bandwidth based on network conditions, modifying modulation schemes or channel width to address congestion or interference.

The network stack 220 of the station 215 can include a sub-band manager 235. The sub-band manager 235 can manage different frequency sub-bands used in wireless communication. A sub-band can correspond to a specific range of frequencies within a larger bandwidth. For example, the 2.4 GHz band used in Wi-Fi can be divided into multiple sub-bands, each corresponding to different channels. The sub-band manager 235 can control sub-band scanning, allocation, and switching to improve network performance.

In some embodiments, the sub-band manager 235 can increase the bandwidth of operation to a threshold. Bandwidth can refer to the rate at which data can be transmitted over a communication channel. For example, bandwidth can indicate the capacity of a communication channel to manage data traffic. Bandwidth can be measured in bits per second (bps), megabits per second (Mbps), or gigabits per second (Gbps). An operation can refer to the functioning and management of wireless networks. For example, an operation can correspond to device management, resource allocation, security management, and traffic management, among other tasks. The bandwidth of operation can refer to the range of frequencies that a communication channel or network can effectively use to transmit data. The threshold can indicate the achievable bandwidth that the WLAN device can support. The threshold can set the limit on the range of frequencies that the WLAN device can utilize for data transmission. For example, a Wi-Fi network operating on a 20 MHz channel indicates that the network can use frequencies within a 20 MHz range for data transmission. In some embodiments, increasing the operating bandwidth to 40 MHz, for example, may allow the network to use a wider range of frequencies.

In some embodiments, the threshold can be determined by the wireless standard the WLAN device operates under (e.g., Wi-Fi 6, Wi-Fi 5). The increased bandwidth can include or be segmented into smaller frequency ranges, referred to herein as sub-bands. A channel can be a specific frequency range within the total available bandwidth. Each sub-band can correspond to a specific channel. In some embodiments, the sub-band manager 235 can modify or increase the bandwidth to the threshold. The sub-band manager 235 can configure the PHY 230 to operate on a wider bandwidth, allowing the PHY 230 to support increased available bandwidth up to the threshold. For example, the PHY 230, based on the configurations, can adjust the spacing between sub-bands (or channels) to enhance the available frequency range. In some embodiments, the PHY 230 can be configured to combine multiple sub-bands to increase the total available bandwidth. For example, in the 5 GHz band, channels can be bonded to form 40MHz, 80MHz, 160MHz, 320MHz, or other combinations such as 240MHz or 480MHz, providing greater data throughput.

In some embodiments, the sub-band manager 235 can disable channel switch and sub-band switch operations across the increased bandwidth. A switch operation can refer to the process of changing the operating frequency or sub-band of a WLAN device. The switch operation can include reconfiguring the device's radio frequency circuitry and adjusting related parameters to facilitate communication on a different channel or sub-band. A channel switch operation can refer to the process of changing the operating frequency or channel of a WLAN device. The channel switch operation can include reconfiguring the device's radio frequency circuitry to operate on a different frequency range. A sub-band switch operation can include transitioning or changing between different frequency ranges within a wider bandwidth. Switching between sub-bands, which are smaller segments of the overall bandwidth, can enhance network performance or prevent interference. In this regard, disabling channel and sub-band switching can refer to restricting the WLAN device (such as the stations 215 or the access points 205) from changing its operating frequency or sub-band during operation.

In some embodiments, the sub-band manager 235 can disable channel switch and sub-band switch operations by setting the configuration to a fixed mode, where the WLAN device operates on a specific sub-band without switching. In another example, the sub-band manager 235 can configure the WLAN device in a dynamic mode, where the WLAN device can switch sub-bands under predefined conditions, where switching occurs under specific conditions, such as when interference levels exceed a specified threshold. In some embodiments, the WLAN device can be configured to operate on a fixed frequency or within a restricted set of frequencies. In some embodiments, the software or firmware can implement restrictions to prevent channel or sub-band switching, for example, by disabling specific application programming interface (API) calls, modifying configuration parameters, or disabling automatic channel switching features such as dynamic frequency selection, among others.

In some embodiments, the sub-band manager 235 can execute adaptive scanning techniques, adjusting the frequency and duration of scans based on network conditions. The sub-band manager 235 can randomly select sub-bands for scanning to reduce congestion or prioritize specific sub-bands that are less congested. In this regard, scanning can refer to the process of searching for available wireless networks, channels, or access points within a certain range. The sub-band manager 235 can measure sub-band quality using metrics such as signal-to-noise ratio or channel occupancy data to determine which sub-bands offer the best conditions. The sub-band manager 235 can use various scanning patterns, such as sequential scanning or frequency hopping, to avoid interference.

In some embodiments, during the Wi-Fi discovery phase, the sub-band manager 235 can configure the WLAN device to continuously scan one or more sub-bands across the available bandwidth without changing the device's operating frequency or sub-band. In some embodiments, the sub-band manager 235 can continuously scan the current sub-band while simultaneously monitoring other sub-bands for activity, allowing the WLAN device to detect available networks or changes in channel conditions without switching operations between sub-bands. For example, while skipping the switch operations between sub-bands, the WLAN device can scan one or more additional sub-bands of the bandwidth. Skipping can refer to bypassing the process of switching between sub-bands while still scanning additional sub-bands. In another example, the sub-band manager 235 can implement parallel scanning of multiple sub-bands, allowing the WLAN device to monitor multiple frequencies simultaneously.

In some embodiments, the sub-band manager 235 can dynamically select sub-bands based on the specific operational modes or requirements of each task. The sub-band manager 235 can continuously monitor network conditions and reassign sub-bands in real-time or near real-time to satisfy operational requirements. In some embodiments, the aggregate scan time across the plurality of sub-bands can be less than the total scan time required when the sub-band manager 235 performs scanning using channel switch operations or sub-band switch operations. The aggregate scan time can refer to the total time taken by the sub-band manager 235 to scan all sub-bands in a given bandwidth. When the sub-band manager 235 is configured to avoid channel switch or sub-band switch operations, the scanning process can reduce the overhead associated with transitioning between channels or sub-bands, such as reconfiguring the device or waiting for stabilization. In some embodiments, the sub-band manager 235 can facilitate various network operations (e.g., data transfer, video calls, etc.) simultaneously on different sub-bands within a single wide bandwidth channel.

In some embodiments, the sub-band manager 235 can scan a sub-band of the plurality of sub-bands on a per-role basis. The roles can include peer-to-peer scanning, access point scanning, or a combination of both in concurrent operations. Each role can be directed to specific functions of the WLAN device. For peer-to-peer scanning, the sub-band manager 235 can directly scan for other devices within the network. The peer-to-peer scanning can be used in ad-hoc networks or applications desiring direct device-to-device communication. During peer-to-peer scanning, the sub-band manager 235 can focus on specific sub-bands or channels based on predefined intervals to improve the peer discovery process. For access point scanning, the sub-band manager 235 can search for available access points in the area as part of the network connection process. The sub-band manager 235 can prioritize scanning for access points with strong signal strength. In concurrent operations, the sub-band manager 235 can manage multiple roles simultaneously. For example, the WLAN device can be connected to an access point while also functioning as a P2P group owner in a direct device-to-device connection. In such cases, the sub-band manager 235 can allocate and scan sub-bands for each role.

In some embodiments, the sub-band manager 235 scans a specific sub-band for a role, such as peer-to-peer scanning. While performing this scan, the sub-band manager 235 can avoid sub-band switching, continuing the scanning process across one or more additional sub-bands for another role, such as access point scanning. The configuration can allow the sub-band manager 235 to search for nearby access points without performing sub-band switch operations. In some embodiments, the sub-band manager 235 can dynamically select one or more sub-bands. For example, the WLAN device can dynamically adjust its scanning behavior based on the current role. Once the role is identified, the sub-band manager 235 can adapt its scanning strategy accordingly, for example, concentrating on specific channels for peer-to-peer scanning or using techniques to detect the access points 205 during access point scanning.

In some embodiments, the sub-band manager 235 can manage sub-band allocation by assigning specific sub-bands to devices or applications based on their operational requirements. In this regard, the sub-band allocation can refer to the process of assigning frequency bands (sub-bands) to stations or applications within the network. The sub-band manager 235 can execute resource allocation processes that align with the bandwidth demands, latency constraints, or throughput requirements of devices. In some embodiments, the allocation can be dynamically adjusted based on network conditions such as channel utilization, interference metrics, and traffic load. The sub-band manager 235 can implement dynamic channel allocation (DCA) algorithms, for example, centralized or distributed, to adapt sub-band assignments in real-time or near real-time as traffic patterns change. The sub-band manager 235 can implement load balancing algorithms, distribute traffic across sub-bands to improve spectral efficiency, and apply prioritization strategies based on quality of service (QoS) parameters, among others.

In some embodiments, the sub-band manager 235 can control sub-band switching, dynamically reassigning the frequency band used by the station 215 within the network. As described herein, switching can refer to the process of directing data packets between devices or networks. The sub-band manager 235 can trigger sub-band switching based on interference metrics, reassigning stations 215 to sub-bands with lower congestion to improve signal quality and transmission rates. The sub-band manager 235 can initiate switching in response to changes in network traffic, reallocating stations 215 to different sub-bands when congestion occurs. The sub-band manager 235 can manage sub-band assignments when additional stations 215 join the network. In some embodiments, the sub-band manager 235 can coordinate sub-band switching through handoff management, synchronizing the transition between sub-bands. The sub-band manager 235 can adjust transmission power during sub-band switching to minimize interference and can implement fast switching mechanisms to reduce the impact on QoS.

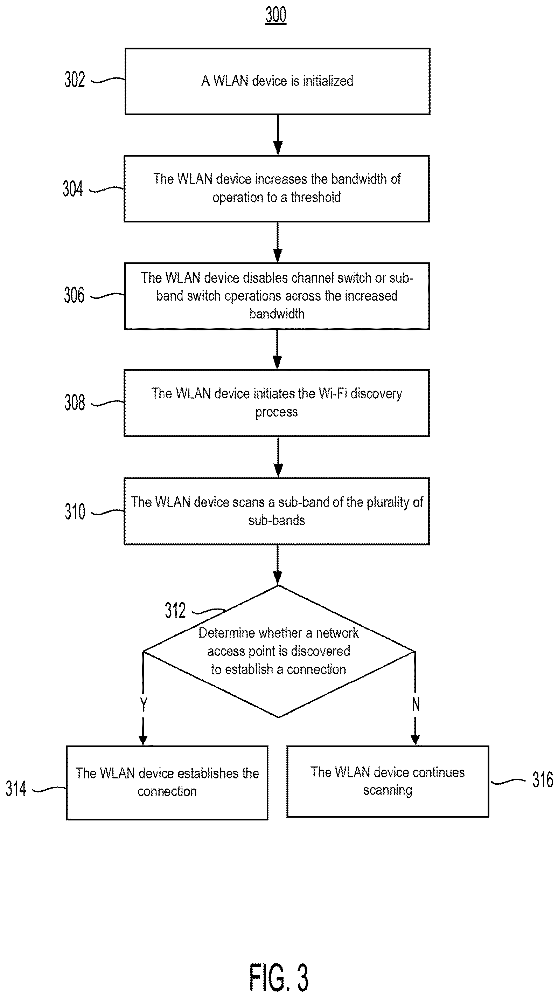

FIG. 3 illustrates a method 300 of improving Wi-Fi discovery time and improving throughput and latency in concurrent use cases using sub-band operations. The method 300 can be implemented using a system 100, 200, or any other features discussed in FIGS. 1-2. The method 300 can include acts 302-316. At 302, a WLAN device can be initialized. At 304, the WLAN device can increase the bandwidth of operation to a threshold. At 306, the WLAN device can disable channel switch or sub-band switch operations across the increased bandwidth. At 308, the WLAN device can initiate the Wi-Fi discovery process. At 310, the WLAN device can scan a sub-band of the plurality of sub-bands. At 312, the WLAN device can determine whether a network access point is discovered to establish a connection. At 314, the WLAN device can establish the connection in response to determining that the network access point has been discovered. At 316, the WLAN device can continue scanning in response to determining that the network access point has not been discovered.

At 302, the WLAN device can be initialized. The WLAN device can start in an uninitialized state upon power-on, where its firmware is not yet loaded, and the WLAN device cannot communicate with the network. The WLAN device's driver or independent hardware vendor (IHV) component can load the firmware, which may include the instructions desired for the WLAN device to operate. The WLAN device can initialize its hardware components, including the radio transceiver, antennas, and other physical layer components. The operating system can initialize the device driver, setting up the MAC address, SSID, security parameters, and other network configuration settings. In some embodiments, the sub-band manager can be initialized. After initialization, the WLAN device can scan for available networks.

At 304, the WLAN device can increase the bandwidth of operation to a threshold. The bandwidth of operation can refer to the range of frequencies that a communication channel or network can effectively use to transmit data. The threshold can indicate the maximum bandwidth that the WLAN device can support. For example, the threshold can be determined by the wireless standard the WLAN device operates under (e.g., Wi-Fi 6, Wi-Fi 5). The increased bandwidth can include or be segmented into smaller frequency ranges, referred to herein as sub-bands. Each sub-band can correspond to a specific frequency range within the total available bandwidth. In some embodiments, each sub-band can correspond to a channel within the bandwidth. In some embodiments, the WLAN device, via the sub-band manager, can modify or increase the bandwidth to the threshold. The sub-band manager can configure the PHY to operate on a wider bandwidth, allowing the PHY to support increased available bandwidth up to a predefined threshold. For example, the PHY, based on the configurations, can adjust the spacing between sub-bands (or channels) to enhance the available frequency range. In some embodiments, the PHY can be configured to combine multiple sub-bands to increase the total available bandwidth. For example, in the 5 GHz band, channels can be bonded to form 40 MHz, 80 MHz, or 160 MHz channels, providing greater data throughput.

At 306, the WLAN device can disable channel switch or sub-band switch operations across the increased bandwidth. The channel switch operation can correspond to the process where a WLAN device switches from one wireless channel to another. The sub-band switching can correspond to switching between different sub-bands within a wider channel. The WLAN device, for example, via the sub-band manager, can disable switching of channels or sub-bands. For instance, the sub-band manager can execute this function by setting the configuration to a fixed mode, where the WLAN device operates on a specific channel or sub-band without switching. In another example, the sub-band manager can configure the WLAN device in a dynamic mode, where the WLAN device can switch between channels or sub-bands under predefined conditions, where switching occurs under predefined conditions, such as when interference levels exceed a specified threshold. In some embodiments, the WLAN device can be configured to operate on a fixed frequency or within a restricted set of frequencies. In some embodiments, the software or firmware can implement restrictions to prevent channel or sub-band switching, for example, by disabling specific application programming interface (API) calls, modifying configuration parameters, or disabling automatic channel switching features such as dynamic frequency selection, among others.

At 308, the WLAN device can initiate the Wi-Fi discovery process. For example, the WLAN device can perform scanning to detect available wireless networks. In some embodiments, the Wi-Fi discovery process can include active scanning, where the WLAN device (or the station) transmits probe requests and receives probe responses from access points, or passive scanning, where the WLAN device monitors beacon frames broadcast by the access points. After scanning, the WLAN device can evaluate the detected networks based on parameters such as signal strength, security protocols, and predefined configurations, and can select the network. The WLAN device can initiate authentication with the selected network to ensure compliance with security protocols (such as WPA2, WPA3), which can include the exchange of security keys or certificates. Once authenticated, the WLAN device can send an association request to the access point, which replies with an association response to complete the connection. In some embodiments, the WLAN device can configure its IP address, for example, through dynamic host configuration protocol or a static assignment, to maintain communication with other devices on the network and access external resources.

At 310, the WLAN device can scan a sub-band of the plurality of sub-bands. For example, during the Wi-Fi discovery phase, the WLAN device can scan a sub-band of the plurality of sub-bands of the bandwidth. The scanning of the sub-band can be based on factors such as predetermined scanning patterns, channel occupancy data, or random selection. In some embodiments, the WLAN device can implement channel hopping, where the device switches between sub-bands within a defined time period. The duration of each scan can be adjusted based on network conditions and the desired responsiveness of the WLAN device.

In some embodiments, the WLAN device can perform the Wi-Fi discovery phase across multiple channels using continuous sub-band scanning. For example, the WLAN device can continuously scan one or more sub-bands across the available bandwidth without switching channels. By continuously scanning sub-bands, the WLAN device can efficiently detect available networks and access points across the bandwidth. In some embodiments, the WLAN device can continuously scan the current sub-band while simultaneously monitoring other sub-bands for activity, allowing the WLAN device to detect available networks or changes in channel conditions without switching operations between sub-bands. For example, while skipping the switch operations between sub-bands, the WLAN device can scan one or more additional sub-bands of the bandwidth. In another example, the WLAN device can implement parallel scanning of multiple sub-bands, allowing the device to monitor multiple frequencies simultaneously.

In some embodiments, the WLAN device can dynamically select sub-bands based on the specific operational modes or requirements of each task. For example, the WLAN device can allocate one sub-band for scanning available networks, another for connecting to a network, and yet another for transmitting or receiving data. The sub-bands can be selected in any order or sequence. The WLAN device can continuously monitor network conditions and reassign sub-bands in real-time or near real-time to satisfy operational requirements. In some embodiments, the aggregate scan time across the plurality of sub-bands can be less than the total scan time required when the WLAN device is configured to perform scanning using channel switch operations or sub-band switch operations. The aggregate scan time can refer to the total time taken by the WLAN device to scan all sub-bands in a given bandwidth. When the WLAN device is configured to avoid channel switch or sub-band switch operations, the scanning process can reduce the overhead associated with transitioning between channels or sub-bands, such as reconfiguring the device or waiting for stabilization. In some embodiments, the WLAN device can perform various network operations (e.g., data transfer, video calls, etc.) simultaneously on different sub-bands within a single wide bandwidth channel.

In some embodiments, the WLAN device can scan a sub-band of the plurality of sub-bands on a per-role basis. The roles can include peer-to-peer scanning, access point scanning, or a combination of both in concurrent operations. Each role can be directed to specific functions of the WLAN device. For peer-to-peer scanning, the WLAN device can directly scan for other devices within the network. The peer-to-peer scanning can be used in ad-hoc networks or applications desiring direct device-to-device communication. During peer-to-peer scanning, the WLAN device can focus on specific sub-bands or channels based on predefined intervals to improve the peer discovery process. For access point scanning, the WLAN device can search for available access points in the area as part of the network connection process. The WLAN device can prioritize scanning for access points with strong signal strength. In concurrent operations, the sub-band manager 235 can manage multiple roles simultaneously. For example, the WLAN device can be connected to an access point while also functioning as a P2P group owner in a direct device-to-device connection. In such cases, the sub-band manager 235 can allocate and scan sub-bands for each role.

In some embodiments, the WLAN device can scan a specific sub-band for a role, such as peer-to-peer scanning. While performing this scan, the WLAN device can avoid sub-band switching, continuing the scanning process across one or more additional sub-bands for another role, such as access point scanning. The configuration can allow the WLAN device to search for nearby access points without performing sub-band switch operations, improving the scanning process for multiple roles within the same bandwidth. In some embodiments, the WLAN device can dynamically select one or more sub-bands. For example, the WLAN device can dynamically adjust its scanning behavior based on the current role. This adjustment can include role identification, where the device determines its function based on network configuration, user inputs, or application demands. Once the role is identified, the WLAN device can adapt its scanning strategy accordingly, for example, concentrating on specific channels for peer-to-peer scanning or using techniques to detect APs during access point scanning. In some embodiments, the WLAN device can allocate resources, such as processing power and memory, based on the role being performed. The role-specific resource allocation can improve network performance by efficiently managing different scanning tasks.

At 312, the WLAN device can determine whether a network access point is discovered to establish a connection. The WLAN device can discover available network access points by scanning one or more sub-bands of the plurality of sub-bands within the bandwidth. The WLAN device can form a list of discovered access points and identify the best access point to establish a connection based on factors such as signal strength, security settings, and user-defined preferences, among others. The WLAN device can perform persistent scanning, continuously searching for available access points using active and/or passive scanning methods. During active scanning, the WLAN device can send out probe requests and wait for responses from nearby access points. If no suitable access point is discovered, the WLAN device can continue sending probe requests at regular intervals. In passive scanning, the WLAN device can monitor for beacon frames broadcast by access points and, if no beacons are detected, continue scanning different channels and sub-bands until an access point is identified. Once a network is detected, the WLAN device can evaluate the network based on signal strength, security settings, and user-defined preferences.

At 314, the WLAN device can establish the connection in response to determining that the network access point has been discovered. The WLAN device can initiate an authentication process with the access point to verify that both entities are authorized to communicate, which can include the exchange of security credentials such as passwords or certificates. After authentication, the WLAN device can transmit an association request to the access point, including information regarding the WLAN device's capabilities. The access point can respond with an association response, granting the device permission to join the network. Once associated, the WLAN device can obtain an IP address for network communication. Upon establishing the connection, the WLAN device can begin data exchange.

At 316, the WLAN device can continue scanning in response to determining that the network access point has not been discovered. For example, the WLAN device can execute continuous scanning techniques, using active or passive scanning, to sequentially search through all available sub-bands within the available bandwidth. In some embodiments, the WLAN device can scan all available sub-bands without switching operations, maintaining its current configuration to avoid overhead such as re-synchronization or re-initialization. The WLAN device can continue this process, scanning adjacent sub-bands within the same frequency range, allowing all sub-bands to be evaluated. The WLAN device can establish a connection with the suitable access point based on factors such as signal strength or network parameters.

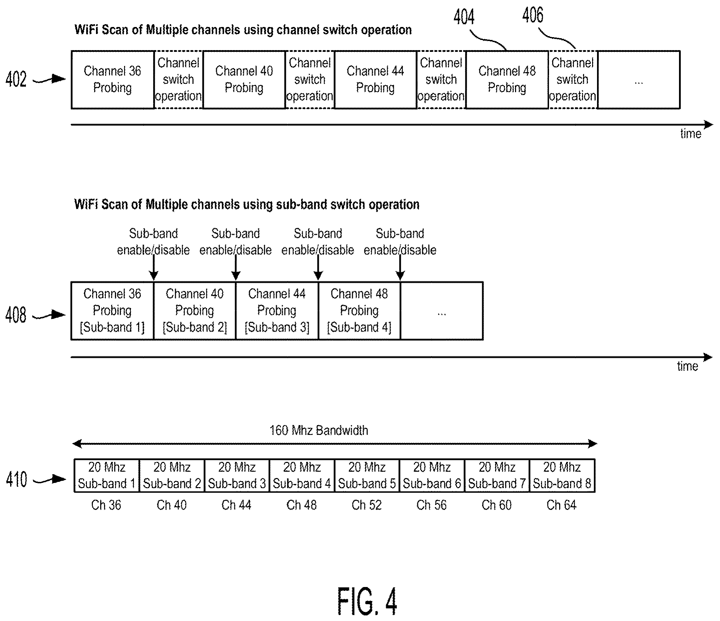

Referring now to FIG. 4, depicted is an example implementation of performing Wi-Fi scanning of multiple channels. For example, in illustration 402, the station 215 (also referred to herein as the WLAN device) scans multiple channels using channel switch operation. In this configuration, the station 215 switches between individual channels to scan each channel separately. The probing blocks 404 can indicate the time spent scanning each channel (e.g., dwell time), and the switch operation blocks 406 can indicate the time required to switch between channels. Assuming eight channels within a 160 MHz bandwidth, as shown in illustration 410, the total scan time can be expressed as T = (8 x Tchdwell) + ((8 - 1) x Tchsw), where "Tchdwell" is the time spent on each channel during the Wi-Fi discovery phase and "Tchsw" is the time taken for channel switch operation.

In illustration 408, the station 215 scans multiple channels using sub-band switch operation. The single wider bandwidth (e.g., 160 MHz) is divided into several adjacent sub-bands, and the station 215 remains within the same overall bandwidth while enabling or disabling individual sub-bands. In this configuration, assuming eight sub-bands, the total scan time can be expressed as T = (8 x Tchdwell). The total time saved is thus ((8 - 1) x Tchsw), as switching between channels is no longer desired. By using sub-band switching, the station 215 can reduce the total time required to scan multiple channels.

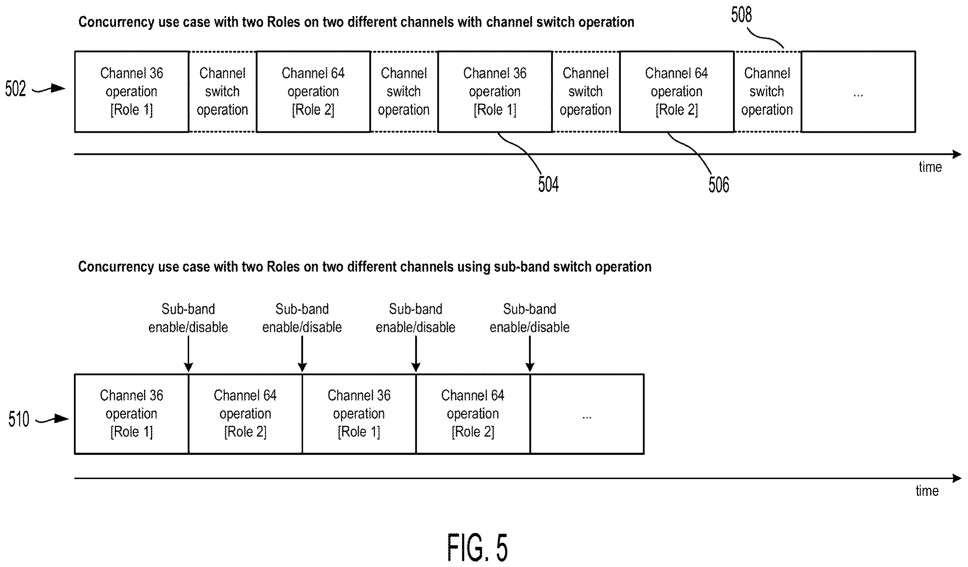

Referring now to FIG. 5, depicted is an example implementation of concurrency use cases with one or more roles operating on different channels. The concurrency use cases can include several roles, where Role 1 operates on channel 36 and Role 2 operates on channel 64. The roles can include peer-to-peer scanning, access point scanning, concurrent operation of both peer-to-peer scanning and access point scanning, and neighbor awareness networking, among others. In illustration 502, the concurrency use cases are shown where two roles are operating on two different channels with channel switch operations. In this configuration, Role 1 on channel 36 is indicated by block 504, and Role 2 on channel 64 is indicated by block 506. The channel switch operation block 508 can indicate the time it takes to switch between two channels. In this configuration, the percentage of time spent by Role 1 during a given period of time can be expressed as: P old_role1 = (Tch_role1/(Tch_role1 + Tch_role2 + (2 x Tchsw))) x 100, where "Tchsw" is the time taken for channel switch operation, "Tch_role1" is the time spent by Role 1 on its operating channel, and "Tch_role2" is the time spent by Role 2 on its operating channel. Similarly, the percentage of time spent by Role 2 during a given period of time can be expressed as: P old_role2 = (Tch_role2/(Tch_role1 + Tch_role2 + (2 x Tchsw))) x 100.

In illustration 510, concurrency use cases are depicted where two roles operate on two different channels using sub-band switch operations. In this configuration, no full channel switch operation is required. Instead, the station 215 can enable or disable one or more sub-bands, as desired. The percentage of time spent by Role 1 during a given period of time can be expressed as: P new_role1 = (Tch_role1/(Tch_role1 + Tch_role2)) x 100. Similarly, the percentage of time spent by Role 2 during a given period of time can be expressed as: P new_role2 = (Tch_role2/(Tch_role1 + Tch_role2)) x 100. As a result, the percentage of time saved for Role 1 can be expressed as: ((Pnew_role1 - Pold_role1)/ Pold_role1) x 100. Similarly, the percentage of time saved for Role 2 can be expressed as: ((Pnew_role2 - Pold_role2)/ Pold_role2) * 100. The percentage savings in time spent on each role on its respective operating channels can improve throughput and reduce latency. For example, the station 215 can transmit and receive data for a longer duration without interruption from switch operations. In some embodiments, the station 215 can remain continuously active on a specific channel or sub-band, leading to faster response times in the network.

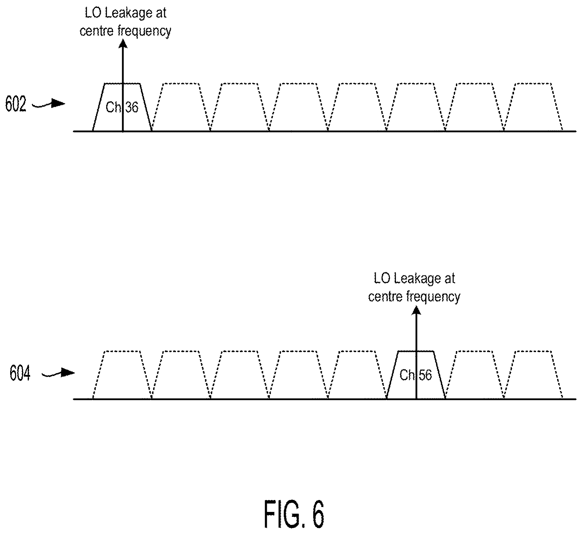

Referring now to FIG. 6, depicted is an example implementation of local oscillator leakage in relation to a station operating on different channels. In illustration 602, the station 215 operates on a channel 36 with a bandwidth of 20 MHz. In illustration 604, the station 215 operates on a channel 56 with a bandwidth of 20 MHz. The local oscillator (LO) can generate a carrier frequency, which is combined with the data signal to generate a modulated signal for transmission. In some embodiments, imperfections in the radio frequency (RF) circuitry may result in a portion of the LO signal unintentionally radiating, leading to LO leakage. When the station operates on channel 36 or channel 56, the LO leakage can be seen at the center frequency of that operating channel. The LO leakage can cause interference with other devices operating on nearby channels or frequencies. In this configuration, the LO leakage can degrade network performance, as it increases interference on adjacent channels, thereby impacting overall communication efficiency.

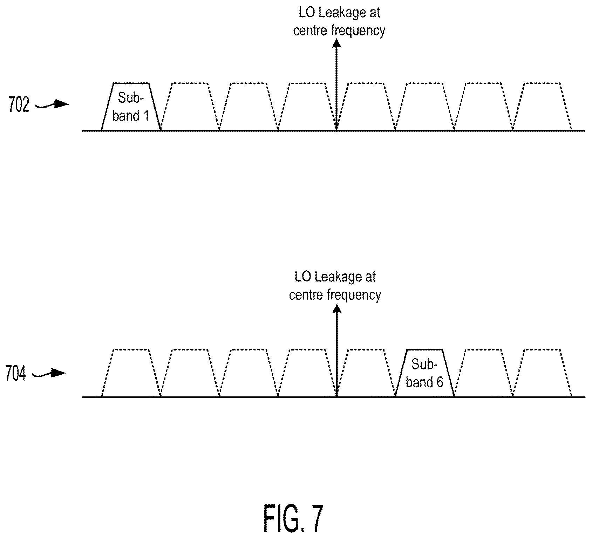

Referring now to FIG. 7, depicted is an example implementation of local oscillator leakage in relation to a station operating on different sub-bands. In this configuration, the station 215 operates on different sub-bands within a wider bandwidth instead of separate channels. For example, in illustration 702, the station 215 operates on sub-band 1, and in illustration 704, the station 215 operates on sub-band 6. In both illustrations 702 and 704, the LO leakage can still occur, but instead of leaking into the center frequency of each individual channel or sub-band, the LO leakage only occurs at the center frequency of the wider bandwidth. This configuration can reduce interference across sub-bands and minimize the impact of LO leakage on neighboring frequencies. For example, the station 215 can reduce the concentration of LO leakage at any specific frequency. For instance, by containing the LO leakage to the center of the wider bandwidth, the station 215 can improve the overall network performance and reduce interference, compared to the channel-based scenario in FIG. 6, where leakage is present at each channel's center frequency. Additionally, as shown in FIG. 7, the continuous traffic pattern across both channels or sub-bands indicates minimized channel switch time, thereby reducing interference and improving network performance.

It should be noted that certain passages of this disclosure may reference terms such as "first" and "second" in connection with devices, modes of operation, transmit chains, roles, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected (which may refer to electronic or communicative coupling or connection, such as for the purposes of data transmission) include indirect and direct couplings and connections.

While the disclosure has been described with respect to specific embodiments, one skilled in the art will recognize that numerous modifications are possible. For instance, although specific examples of rules (including triggering conditions and/or resulting actions) and processes for generating suggested rules are described, other rules and processes can be implemented. Embodiments of the disclosure can be realized using a variety of computer systems and communication technologies including but not limited to specific examples described herein.

Embodiments of the present disclosure can be realized using any combination of components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present disclosure may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium).

Thus, although the disclosure has been described with respect to specific embodiments, it will be appreciated that the disclosure is intended to cover all modifications and equivalents within the scope of the following claims.

It should be understood that the disclosed embodiments are not representative of all claimed innovations. As such, certain aspects of the disclosure have not been discussed herein. Alternate embodiments that may not have been presented for a specific portion of the innovations or that further undescribed alternate embodiments may be available for a portion is not to be considered a disclaimer of those alternate embodiments. Thus, it is to be understood that other embodiments can be utilized and functional, logical, operational, organizational, structural and/or topological modifications may be made without departing from the scope of the disclosure. As such, all examples and/or embodiments are deemed to be non-limiting throughout this disclosure.

Some embodiments described herein relate to methods. It should be understood that such methods can be computer implemented methods (e.g., instructions stored in memory and executed on processors). Where methods described above indicate certain events occurring in a certain order, the ordering of certain events can be modified. Additionally, certain of the events can be performed repeatedly, concurrently in a parallel process when possible, as well as performed sequentially as described above. Furthermore, certain embodiments can omit one or more described events.

Some embodiments described herein relate to a computer storage product with a non-transitory computer-readable medium (also can be referred to as a non-transitory processor-readable medium) having instructions or computer code thereon for performing various computerimplemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for a specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field-programmable gate array (FPGA), and/or an application-specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as those produced by a compiler, code used to produce a web service, and files containing higher-level instructions that are executed by a computer using an interpreter. For example, embodiments can be implemented using Python, Java, JavaScript, C++, and/or other programming languages and software development tools. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features may not necessarily be limited to a particular order of execution, but rather, any number of threads, processes, services, servers, and/or the like that may execute serially, asynchronously, concurrently, in parallel, simultaneously, synchronously, and/or the like in a manner consistent with the disclosure. As such, some of these features may be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.
The following are further embodiments of the invention:
1. A system comprising:
   a wireless local area network (WLAN) device comprising a physical layer (PHY) configured to increase a bandwidth of operation to a threshold and to disable switch operations for a channel switch or sub-band switch, the bandwidth comprising a plurality of sub-bands, each of the plurality of sub-bands corresponding to a channel of a plurality of channels of the increased bandwidth;
   wherein the WLAN device is configured during a Wi-Fi discovery phase to:
      scan a sub-band of the plurality of sub-bands of the bandwidth; and
      while skipping the switch operations between sub-bands, scan one or more additional sub-bands of the plurality of sub-bands of the bandwidth.
2. The system of Embodiment 1, wherein the threshold is a maximum bandwidth configured on the WLAN device based on a wireless standard being used by the WLAN device.
3. The system of Embodiment 1, wherein an aggregate of scan times through the plurality of sub-bands is less than an aggregate scan time when the WLAN device is configured to scan using channel switch operations or sub-band switch operations.
4. The system of Embodiment 1, wherein the WLAN device further configured to scan the one or more additional sub-bands of the plurality of sub-bands of the bandwidth until a network access point is discovered for which to make a connection.
5. The system of Embodiment 1, wherein the WLAN device is configured to dynamically select the sub-band of the plurality of sub-bands for one or more operational modes within the bandwidth.
6. The system of Embodiment 1, wherein the WLAN device is configured to perform the Wi-Fi discovery phase across multiple channels using continuous sub-band scanning across the bandwidth.
7. The system of Embodiment 1, wherein the WLAN device is configured to implement one or more network operations across the plurality of sub-bands within a wide bandwidth channel.
8. A system comprising:
   a wireless local area network (WLAN) device configured to increase a bandwidth of operation and to disable switch operations for a channel switch or sub-band switch, the bandwidth comprising a plurality of sub-bands, each of the plurality of sub-bands corresponding to a channel of a plurality of channels of the bandwidth;
   wherein the WLAN device is configured to scan sub-bands on a per-role basis:
      scan a sub-band of the plurality of sub-bands of the bandwidth for a first role of a plurality of roles; and
      while skipping the switch operations between sub-bands, scan one or more additional sub-bands of the plurality of sub-bands of the bandwidth for a second role of the plurality of roles.
9. The system of Embodiment 8, wherein a physical layer (PHY) of the WLAN device is configured to increase the bandwidth of operation to a threshold.
10. The system of Embodiment 9, wherein the threshold is a maximum bandwidth configured on the WLAN device based on a wireless standard being used by the WLAN device.
11. The system of Embodiment 8, wherein the WLAN device is configured to perform concurrent operations for the plurality of roles, the plurality of roles comprising peer-to-peer scanning and access point scanning.
12. The system of Embodiment 8, wherein an aggregate of scan times through the plurality of sub-bands is less than an aggregate scan time when the WLAN device is configured to scan using channel switch operations or sub-band switch operations.
13. The system of Embodiment 8, wherein the WLAN device is configured to scan the one or more additional sub-bands of the plurality of sub-bands of the bandwidth until a network access point is discovered for which to make a connection.
14. The system of Embodiment 8, wherein the WLAN device is configured to dynamically select the sub-band of the plurality of sub-bands for one or more operational modes within the bandwidth.
15. The system of Embodiment 8, wherein the WLAN device is configured to perform the Wi-Fi discovery phase across multiple channels using continuous sub-band scanning across the bandwidth.
16. The system of Embodiment 8, wherein the WLAN device is configured to implement one or more network operations across the plurality of sub-bands within a wide bandwidth channel.
17. A method comprising:
   increasing, by a wireless local area network (WLAN) device comprising a physical layer (PHY), a bandwidth of operation to a threshold;
   disabling, by the WLAN device, switch operations for a channel switch or a sub-band switch, the bandwidth comprising a plurality of sub-bands, each of the plurality of sub-bands corresponding to a channel of a plurality of channels of the increased bandwidth;
   scanning, by the WLAN device, during a Wi-Fi discovery phase, a sub-band of the plurality of sub-bands of the bandwidth; and
   while skipping the switch operations between sub-bands, scanning, by the WLAN device, one or more additional sub-bands of the plurality of sub-bands of the bandwidth.
18. The method of Embodiment 17, wherein the threshold is a maximum bandwidth configured on the WLAN device based on a wireless standard being used by the WLAN device.
19. The method of Embodiment 17, further comprising reducing an aggregate scan time through the plurality of sub-bands, wherein the aggregate scan time through the plurality of sub-bands is less than the aggregate scan time when the WLAN device is configured to scan using channel switch operations or sub-band switch operations.
20. The method of Embodiment 17, further comprising scanning, by the WLAN device, the one or more additional sub-bands of the plurality of sub-bands of the bandwidth until a network access point is discovered for which to make a connection.

## Claims

1. A system comprising:
a wireless local area network (WLAN) device comprising a physical layer (PHY) configured to increase a bandwidth of operation to a threshold and to disable switch operations for a channel switch or sub-band switch, the bandwidth comprising a plurality of sub-bands, each of the plurality of sub-bands corresponding to a channel of a plurality of channels of the increased bandwidth;
wherein the WLAN device is configured during a Wi-Fi discovery phase to:
scan a sub-band of the plurality of sub-bands of the bandwidth; and
while skipping the switch operations between sub-bands, scan one or more additional sub-bands of the plurality of sub-bands of the bandwidth.

2. The system of claim 1, wherein the threshold is a maximum bandwidth configured on the WLAN device based on a wireless standard being used by the WLAN device.

3. A system comprising:
a wireless local area network (WLAN) device configured to increase a bandwidth of operation and to disable switch operations for a channel switch or sub-band switch, the bandwidth comprising a plurality of sub-bands, each of the plurality of sub-bands corresponding to a channel of a plurality of channels of the bandwidth;
wherein the WLAN device is configured to scan sub-bands on a per-role basis:
scan a sub-band of the plurality of sub-bands of the bandwidth for a first role of a plurality of roles; and
while skipping the switch operations between sub-bands, scan one or more additional sub-bands of the plurality of sub-bands of the bandwidth for a second role of the plurality of roles.

4. The system of claim 3, wherein a physical layer (PHY) of the WLAN device is configured to increase the bandwidth of operation to a threshold,

5. The system of claim 4, wherein the threshold is a maximum bandwidth configured on the WLAN device based on a wireless standard being used by the WLAN device.

6. The system of any of claims 3 to 5, wherein the WLAN device is configured to perform concurrent operations for the plurality of roles, the plurality of roles comprising peer-to-peer scanning and access point scanning.

7. The system of any preceding claim, wherein an aggregate of scan times through the plurality of sub-bands is less than an aggregate scan time when the WLAN device is configured to scan using channel switch operations or sub-band switch operations.

8. The system of any preceding claim, wherein the WLAN device is configured to scan the one or more additional sub-bands of the plurality of sub-bands of the bandwidth until a network access point is discovered for which to make a connection.

9. The system of any preceding claim, wherein the WLAN device is configured to dynamically select the sub-band of the plurality of sub-bands for one or more operational modes within the bandwidth.

10. The system of any preceding claim, wherein the WLAN device is configured to perform the Wi-Fi discovery phase across multiple channels using continuous sub-band scanning across the bandwidth.

11. The system of any preceding claim, wherein the WLAN device is configured to implement one or more network operations across the plurality of sub-bands within a wide bandwidth channel.

12. A method comprising:
increasing, by a wireless local area network (WLAN) device comprising a physical layer (PHY), a bandwidth of operation to a threshold;
disabling, by the WLAN device, switch operations for a channel switch or a sub-band switch, the bandwidth comprising a plurality of sub-bands, each of the plurality of sub-bands corresponding to a channel of a plurality of channels of the increased bandwidth;
scanning, by the WLAN device, during a Wi-Fi discovery phase, a sub-band of the plurality of sub-bands of the bandwidth; and
while skipping the switch operations between sub-bands, scanning, by the WLAN device, one or more additional sub-bands of the plurality of sub-bands of the bandwidth.

13. The method of claim 12, wherein the threshold is a maximum bandwidth configured on the WLAN device based on a wireless standard being used by the WLAN device.

14. The method of claim 12 or 13, further comprising reducing an aggregate scan time through the plurality of sub-bands, wherein the aggregate scan time through the plurality of sub-bands is less than the aggregate scan time when the WLAN device is configured to scan using channel switch operations or sub-band switch operations.

15. The method of any of claims 12 to 14, further comprising scanning, by the WLAN device, the one or more additional sub-bands of the plurality of sub-bands of the bandwidth until a network access point is discovered for which to make a connection.
